# EUROPÄISCHE PATENTANMELDUNG

(11) **EP 3 401 467 A2**
(43) Veröffentlichungstag der Anmeldung: **14.11.2018**
(21) Anmeldenummer: 18171751.3
(22) Anmeldetag: 11.05.2018
(51) Int. Cl.: E04H 6/42, G08G 1/16, B62D 15/02

(54) **GARAGENTORANTRIEB ZUM ÖFFNEN UND SCHLIESSEN EINES GARAGENTORES**

(30) Priorität: 12.05.2017 LU 100216
(71) Anmelder: Alfred Schellenberg GmbH, 57078 Siegen (DE)
(72) Erfinder: Schellenberg, Sascha, 57074 Siegen (DE); Gross, Christian, 57250 Netphen (DE); Gräfer, Rainer, 51674 Wiehl (DE); Schmidt, John, 57072 Siegen (DE)
(74) Vertreter: Hoffmann, Jürgen

(57) **Zusammenfassung**

Die Erfindung betrifft einen Garagentorantrieb zum Öffnen und Schließen des Garagentores. Der Garagentorantrieb weist ein optisches Sensorsystem auf, das einen optischen Sensor und eine elektronische Auswerte- und Steuerungsvorrichtung beinhaltet. Die Auswerte- und Steuerungsvorrichtung empfängt elektrische Sensorsignale von dem optischen Sensor. Das optische Sensorsystem ist dazu ausgebildet, wenigstens einen Umgebungsbereich des Garagentorantriebs zu überwachen und ein Warn- oder Hinweissignal unmittelbar in eine Garage, in der der Gargentorantrieb montiert ist, auszugeben und/oder eine sicherheitsrelevante Aktivität des Garagentores auszulösen.

## Beschreibung

Die Erfindung betrifft einen Garagentorantrieb zum Öffnen und Schließen eines Garagentores, wobei der Garagentorantrieb ein optisches Sensorsystem, das einen optischen Sensor und eine elektronische Auswerte- und Steuerungsvorrichtung aufweist, die elektrische Sensorsignale von dem optischen Sensor empfängt, und das dazu ausgebildet ist, wenigstens einen Umgebungsbereich des Garagentorantriebs zu überwachen.

Garagentorantriebe dienen dazu, Garagentore motorgetrieben öffnen und schließen zu können. Oftmals sind Garagentorantriebe derart aufgebaut, dass ein an einer Laufschlittenführung verschiebbar gelagerter Laufschlitten motorgetrieben, beispielsweise über ein Zugmittel, bewegt wird. Der Laufschlitten ist mit dem Torblatt beziehungsweise mit den Torblattsektionen (bei einem Sektionaltor) verbunden, so dass durch das Bewegen des Laufwagens das Torblatt beziehungsweise die Torblattsektionen wahlweise in eine Öffnungsstellung oder eine geschlossene Stellung überführt werden können. Oftmals sind Garagentorantriebe dazu ausgebildet, über Funk, beispielsweise mittels eines Handsenders, angesteuert zu werden.

Aus US 2016/0203721 A1 ist ein trainierbaren Sendeempfänger bekannt, der im Fahrzeug angeordnet wird. Der trainierbaren Sendeempfänger kann mit einem Garagentoröffner, der eine Kamera aufweisen kann, kommunizieren.

Es ist die Aufgabe der vorliegenden Erfindung einen Torantrieb anzugeben, dessen Funktionsumfang, insbesondere auch im Hinblick auf sicherheitsrelevante Aspekte, erweitert ist.

Die Aufgabe wird durch einen Garagentorantrieb gelöst, der dadurch gekennzeichnet ist, dass das optische Sensorsystem dazu ausgebildet ist, ein Warn- oder Hinweissignal unmittelbar in eine Garage, in der der Gargentorantrieb montiert ist, auszugeben und/oder eine sicherheitsrelevante Aktivität des Garagentores auszulösen.

Der erfindungsgemäße Garagentorantrieb hat den ganz besonderen Vorteil, dass insbesondere sicherheitsrelevante Vorgänge in und vor einer Garage erfasst und/oder überwacht werden können.

Dies ist erfolgt vorteilhaft in der Weise, dass die Benutzer an oder in ihren Fahrzeugen keinerlei Vorkehrungen treffen müssen. Insbesondere ist es nicht notwendig, dass der Fahrer in seinem Fahrzeug einen speziellen Empfänger mitführt, sondern unmittelbar in eine Garage, in der der Gargentorantrieb montiert ist. Dies kann beispielsweise durch eine optische Projektion oder durch die unmittelbare Ausgabe eines Tones oder einer Tonfolge oder einer Sprachansage erfolgen. Insoweit ist vorzugsweise ganz allgemein vorgesehen, dass das optische Sensorsystem das akustische oder optische Warn- oder Hinweissignal nicht mittels eines in einem Fahrzeug anordenbaren oder angeordneten Sendeempfängers, insbesondere trainierbaren Sendempfängers, ausgibt. Eine solche Ausführung hat beispielsweise den ganz besonderen Vorteil, dass auch an Fußgänger, die die Garage betreten oder betreten wollen, ein optisches oder akustisches Warn- oder Hinweissignal unmittelbar ausgegeben werden kann. Ein weiterer Vorteil liegt darin begründet, dass auch diejenigen Fahrer ein optisches oder akustisches Warn- oder Hinweissignal wahrnehmen können, die keinen speziellen Empfänger im Fahrzeug mitführen.

Bei einer besonderen Ausführung ist das optische Sensorsystem dazu ausgebildet, einen Abstellbereich für ein Fahrzeug zu überwachen. Der Abstellbereich kann eine Parksollposition für ein Fahrzeug oder mehrere Parksollpositionen für mehrere Fahrzeuge umfassen. Durch die Parksollposition wird vorgegeben, wo ein Fahrzeug idealer Weise abgestellt werden soll. Insbesondere kann der vorteilhaft vorgesehen sein, dass der Abstellbereich und/oder wenigstens eine Parksollposition bei der Installation des Garagentorantriebs oder zu einem späteren Zeitpunkt festgelegt und in einem Speicher des Garagentorantriebs abgelegt werden können.

Bei einer ganz besonders vorteilhaften Ausführung ist der optische Sensor dazu ausgebildet und angeordnet, eine Position eines Fahrzeuges oder mehrerer Fahrzeuge, insbesondere relativ zu einem Abstellbereich und/oder einer Parksollposition, zu erfassen. Insbesondere kann der optische Sensor dazu ausgebildet und angeordnet sein, fortlaufend Positionen wenigstens eines Fahrzeuges bei einem Einparkvorgang zu erfassen. Eine solche Ausführung hat den ganz besonderen Vorteil, dass der Garagentorantrieb den Fahrer eines Fahrzeuges auf der Basis der erfassten Positionen bei einem Ein- oder Ausparkvorgang unterstützen kann. Hierzu kann insbesondere vorgesehen sein, dass die Auswerte- und Steuerungsvorrichtung eine erfasste Position eines Fahrzeugs mit einer Parksollposition vergleicht oder dass die Auswerte- und Steuerungsvorrichtung erfasste Positionen eines Fahrzeugs fortlaufend mit einer Parksollposition vergleicht.

Bei einer besonderen Ausführung errechnet die Auswerte- und Steuerungsvorrichtung die Bewegung eines Fahrzeugs und/oder eine Fahrzeuggeschwindigkeit. Es kann insbesondere vorteilhaft vorgesehen sein, dass die Auswerte- und Steuerungsvorrichtung auf der Basis der, insbesondere zeitabhängig, erfassten Positionen eines Fahrzeugs eine wahrscheinliche Bewegung des Fahrzeugs vorausberechnet.

In Abhängigkeit von den erfassten Position und/oder in Abhängigkeit von der errechnete Fahrzeuggeschwindigkeit und/oder in Abhängigkeit von einer vorausberechneten wahrscheinlichen Bewegung des Fahrzeugs kann der Garagentorantrieb als Warn- oder Hinweissignal optische und/oder akustische Steuerungsvorgaben zum Unterstützen eines Fahrers bei der Positionierung seines Fahrzeugs zum Erreichen der Parksollposition ausgeben.

Der Garagentorantrieb kann dem Fahrer die Hinweise beispielsweise mittels eines Projektors geben, der Steuerungsvorgaben, insbesondere Lenkvorgaben und/oder Fahrtrichtungsvorgaben und/oder eine Anhaltevorgabe, auf eine Wand oder den Boden oder die Decke der Garage projiziert. Hierbei kann zusätzlich vorteilhaft vorgesehen sein, dass sich die Lichtfarbe der Projektionen situationsangepasst und/oder ereignisabhängig ändert. Beispielsweise kann sich die Lichtfarbe von gelb auf rot ändern, wenn eine Kollision mit einer Wand oder einem Gegenstand droht. Alternativ oder zusätzlich kann sich die Lichtfarbe beispielsweise von gelb auf grün ändern, sobald die Parksollposition erreicht wird und/oder wenn das Fahrzeug auszuschalten ist.

Der Garagentorantrieb kann, alternativ oder zusätzlich, einen Lautsprecher aufweisen, der akustische Warn- oder Hinweissignale in Bezug auf das Erreichen der angestrebten Parksollposition ausgibt. Insbesondere kann vorteilhaft vorgesehen sein, dass der Garagentorantrieb über den Lautsprecher Sprachanweisungen, wie: "rechts", "links", "vorwärts", "rückwärts" oder "halt" ausgibt. Alternativ oderzusätzlich ist es auch möglich, dass mittels des Lautsprechers Tonsignale ausgegeben werden, deren Amplitude und/oder deren zeitlicher Abstand und/oder deren Frequenz sich beim Annähern an die Parksollposition verändern. Wenn der Garagentorantrieb erkennt, dass eine Kollision mit einem Gegenstand, einer Person oder den Wänden der Garage droht, kann beispielsweise ein Dauerpfeifton ausgegeben werden. Ganz allgemein kann vorteilhaft vorgesehen sein, dass der Garagentorantrieb ein Warnsignal ausgibt, wenn das optische Sensorsystem Personen oder Gegenstände in dem Abstellbereich und/oder der Parksollposition erfasst.

Es ist alternativ oder zusätzlich auch möglich, dass der Garagentorantrieb erkennt, dass eine Kollision der Fahrzeugtür mit einer Wand oder einem Gegenstand droht und vor einer solchen Gefahr durch Ausgabe eines Warnsignals warnt. Auf diese Weise ist vorteilhaft beispielsweise erreicht, dass die Personen, die aus einem gerade geparkten Fahrzeug aussteigen wollen, gewarnt sind und die betroffene Fahrzeugtür vorsichtig oder gar nicht öffnen.

Das optische Sensorsystem kann - alternativ oder zusätzlich zu den anderen beschriebenen Funktionen - vorteilhaft dazu ausgebildet sein, eine Stellung eines Garagentors zu erfassen. Insbesondere kann vorteilhaft vorgesehen sein, dass die Auswerte- und Steuerungsvorrichtung eine erfasste Stellung des Garagentors mit einer Garagentorsollposition vergleicht.

Der Garagentorantrieb erhält üblicher Weise von einem Benutzer, beispielsweise per Funk oder durch eine Eingabe an einem stationären Tastenfeld, Steuerungsvorgaben, um das Garagentor zu öffnen oder zu schließen. Der Garagentorantrieb führt daraufhin durch entsprechende Ansteuerung eines Antriebsmotors die Steuervorgaben aus. Hierbei kann vorteilhaft vorgesehen sein, dass der Garagentorantrieb mittels des optischen Sensorsystems fortlaufend überprüft, ob das Garagentor die ausgelöste Öffnungs- oder Schließbewegung tatsächlich ausführt oder ob das Garagentor die Öffnungsposition oder die Schließposition vollständig erreicht hat.

Außerdem kann auf diese Weise durch den Garagentorantrieb vorteilhaft festgestellt werden, ob beispielsweise ein Einbruch vorliegt. Sollte das Garagentor gemäß den Steuerungsvorgaben nämlich eigentlich geschlossen sein, während das optische Sensorsystem feststellt, dass das Garagentor offen steht, so kann daraus geschlossen werden, dass das Garagentor unter Umgehung des Garagentorantriebes manuell, möglicherweise gewaltsam, geöffnet wurde.

Ganz allgemein kann vorteilhaft vorgesehen sein, dass die Auswerte- und Steuerungsvorrichtung eine mittels des optischen Sensorsystems erfasste Stellung des Garagentors, insbesondere fortlaufend, mit einer Garagentorsollposition vergleicht. Hierzu kann beispielsweise vorteilhaft vorgesehen sein, dass in der Auswerte- und Steuerungsvorrichtung Abbildungen des Garagentors in unterschiedlichen Positionen abgespeichert sind. Insbesondere können beispielsweise eine Abbildung des vollständig geöffneten Garagentors sowie eine Abbildung des vollständig geschlossenen Garagentors gespeichert sein. Darüber hinaus können Abbildungen gespeichert sein, die in unterschiedlichen Stadien des Öffnungs- beziehungsweise Schließvorganges aufgenommen wurden. Anhand der Abbildungen kann der Garagentorantrieb durch Vergleich mit der jeweils aktuell aufgenommenen Abbildung ermitteln, ob das Garagentor den Steuerungsvorgaben folgt oder nicht.

Insbesondere kann vorteilhaft vorgesehen sein, dass der Garagentorantrieb ein Warn- oder Hinweissignal ausgibt, wenn die jeweils erfasste Stellung des Garagentors nicht mit der Garagentorsollposition übereinstimmt.

Das optische Sensorsystem kann - alternativ oder zusätzlich zu den anderen beschriebenen Funktionen - vorteilhaft dazu ausgebildet sein, eine Fahrzeuggröße zu erfassen und mit einer Fahrzeugmaximalgröße zu vergleichen. Auf diese Weise ist es ermöglicht, einem Fahrer, der gerade beabsichtigt, ein Fahrzeug in eine geöffnete und mit dem erfindungsgemäßen Garagentorantrieb ausgerüstete Garage einzufahren, durch Ausgabe eines, insbesondere optischen und/oder akustischen, Warnsignals anzuzeigen, dass das Fahrzeug die maximal zulässige Größe, insbesondere die Größe eines Abstellbereichs oder einer Parksollposition, überschreitet und beispielsweise die Gefahr besteht, beim Einparken mit den Garagenwänden oder Gegenständen zu kollidieren oder dass beispielsweise die Gefahr besteht, nach dem erfolgten Einparken die Fahrzeugtüren nicht mehr öffnen zu können, weil zu wenig Raum in der Garage zur Verfügung steht.

Das optische Sensorsystem kann - alternativ oder zusätzlich zu den anderen beschriebenen Funktionen - vorteilhaft dazu ausgebildet sein, einen Gefahrenbereich eines Garagentores zu überwachen. Insbesondere kann vorteilhaft vorgesehen sein, dass der Garagentorantrieb eine Öffnungs- oder Schließbewegung anhält und/oder ein Warnsignal ausgibt, wenn der optische Sensor Gegenstände oder Personen im Gefahrenbereich des Garagentors erfasst.

Der optische Sensor kann beispielsweise einen Bewegungsmelder und/oder eine Kamera beinhalten. Es ist beispielsweise auch möglich, dass der optische Sensor als Bewegungsmelder und/oder als Kamera ausgebildet ist. Beispielsweise kann der optische Sensor - alternativ oder zusätzlich - eine Lichtschranke beinhalten.

Das auszugebende Warn- oder Hinweissignal kann, wie beispielhaft bereits erwähnt, ein optisches Signal sein. Insbesondere kann das Warn- oder Hinweissignal das Ändern einer Lichtfarbe eines von dem Garagentorantrieb abgestrahlten Lichtes umfassen. Es ist - alternativ oder zusätzlich - auch möglich, dass das Warn- oder Hinweissignal ein Blinken eines von dem Garagentorantrieb abgestrahlten Lichtes oder ein Lauflicht umfasst.

Bei einer besonders vorteilhaften Ausführung beinhaltet das Warn- oder Hinweissignal das optische Projizieren eines Symbols oder einer Schrift, insbesondere auf eine Wand oder den Boden der Garage. Es ist insbesondere auch möglich, dass das Warn- oder Hinweissignal ein Bewegen einer optischen Projektion beinhaltet.

Alternativ oder zusätzlich kann das Warn- oder Hinweissignal ein akustisches Signal sein. Insbesondere kann vorteilhaft vorgesehen sein, dass das Warn- oder Hinweissignal Sprachanweisungen, insbesondere auch mehrsprachige Sprachanweisungen, beinhaltet. Alternativ oder zusätzlich ist es auch möglich, dass als Warn- oder Hinweissignal Tonsignale ausgegeben werden, deren Amplitude und/oder deren zeitlicher Abstand und/oder deren Frequenz sich ereignisabhängig verändern.

Das Ausgeben eines Warn- oder Hinweissignals kann insbesondere umfassen, eine Lichtquelle einzuschalten oder eine bereits eingeschaltete Lichtquelle abzuschalten.

Bei der Lichtquelle handelt es sich bei einer ganz besonders vorteilhaften Ausführung um ein Lichtband, insbesondere ein LED-Lichtband. Hierbei kann insbesondere vorteilhaft vorgesehen sein, dass zum Ausgeben eines Warn- oder Hinweissignals gezielt zeitlich nacheinander einzelne Sublichtquellen, insbesondere LEDs, des Lichtbandes ein- oder ausgeschaltet werden. Auf diese Weise kann beispielsweise ein Lauflicht erzeugt werden. Ein Lauflicht kann insbesondere beinhalten, dass die Sublichtquellen so angesteuert werden, dass der Eindruck eines wandernden Lichts entsteht. Auf diese Weise kann beispielsweise eine Richtung angezeigt werden.

Alternativ oder zusätzlich kann vorteilhaft auch vorgesehen sein, dass die Farbe des von der Lichtquelle oder von einzelnen Bereichen der Lichtquelle geändert wird, um ein Warn- oder Hinweissignal auszugeben. Der Farbwechsel kann insbesondere in fortlaufendem Wechsel zwischen wenigstens zwei Farben erfolgen.

Alternativ oder zusätzlich, insbesondere zusätzlich zu einem Ausgeben eines Warn- oder Hinweissignals unmittelbar in eine Garage, in der der Gargentorantrieb montiert ist, und/oder zu dem Auslösen einer sicherheitsrelevante Aktivität des Garagentores, kann das das Warn- oder Hinweissignal ein Funksignal an ein, insbesondere mobiles, Empfangsgerät umfassen.

Vorzugsweise weist der Garagentorantrieb ein Gehäuse zur Überkopfmontage und/oder zur Montage an einer Garagendecke auf. Der optische Sensor kann vorteilhaft an oder wenigstens teilweise in dem Gehäuse angeordnet sein. In dem Gehäuse kann insbesondere auch die elektronische Auswerte- und Steuerungsvorrichtung angeordnet sein. Der Garagentorantrieb kann in dem Gehäuse einen Antriebsmotor zum Bewegen eines Torblattes oder von Torblattsektionen aufweisen.

Insbesondere kann der Garagentorantrieb dazu ausgebildet sein, ein Garagentor, insbesondere ein Schwingtor oder ein Sektionaltor, über ein Übertragungsmittel, insbesondere ein Zugmittel oder eine Kette oder einen Zahnriemen oder eine Spindel, zwischen einer Geschlossenstellung und einer Öffnungsstellung zu bewegen.

Ganz allgemein kann vorteilhaft vorgesehen sein, dass der Garagentorantrieb alternativ oder zusätzlich zur Ausgabe eines Warn- oder Hinweissignals eine sicherheitsrelevante Aktivität auslöst. Die sicherheitsrelevante Aktivität kann beispielsweise das Öffnen oder das Schließen des Garagentores beinhalten oder das Auslösen einer Funktion eines externen Gerätes, wie beispielsweise eines Lüftungssystems einer Garage.

Von ganz besonderem Vorteil ist ein Garagentorsystem, das ein Garagentor, insbesondere ein Schwingtor oder ein Sektionaltor, sowie einen erfindungsgemäßen Garagentorantrieb aufweist, mittels dem das Garagentor von einer Geschlossenstellung und in eine Öffnungsstellung oder von einer Öffnungsstellung und in eine Geschlossenstellung bewegbar ist. Hierbei kann vorteilhaft insbesondere vorgesehen sein, dass das Garagentor wenigstens eine Laufschlittenführung zum Führen eines Laufschlittens oder Führungsschienen zum Führen eines Torblattes oder zum Führen von Torblattsektionen aufweist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine Garage mit einem Gargentor und mit einem ersten Ausführungsbeispiel eines erfindungsgemäßen Garagentorantriebs,
- Fig.2: eine Garage mit einem Gargentor und mit einem zweiten Ausführungsbeispiel eines erfindungsgemäßen Garagentorantriebs,

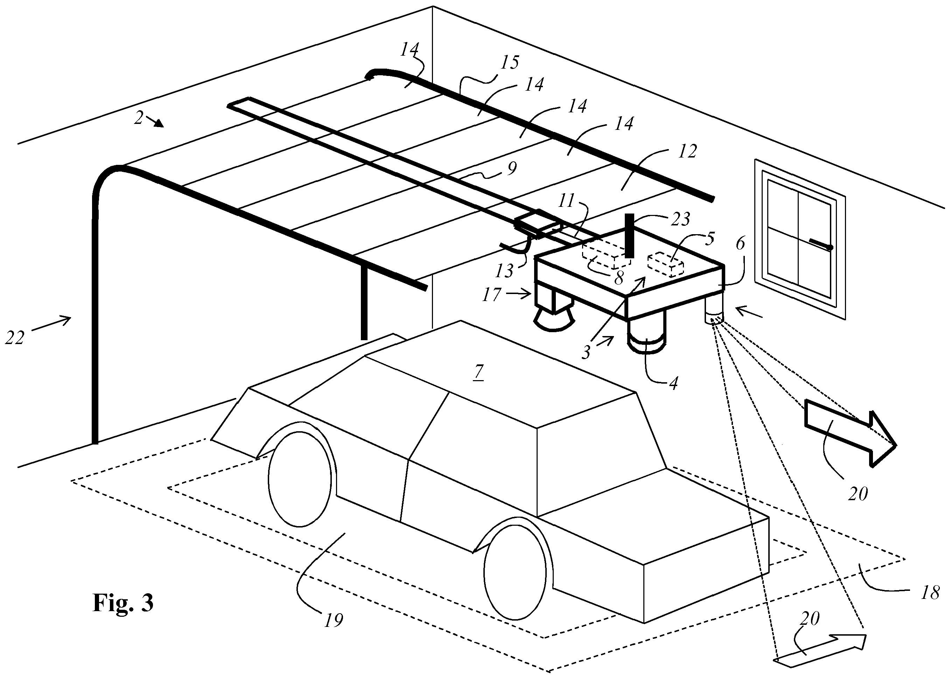

- Fig.3: das zweite Ausführungsbeispiel eines erfindungsgemäßen Garagentorantriebs bei einem Einparkvorgang,
- Fig.4: eine Garage mit einem Gargentor und mit einem dritten Ausführungsbeispiel eines erfindungsgemäßen Garagentorantriebs, und
- Fig. 5: eine Garage mit einem Gargentor und mit einem vierten Ausführungsbeispiel eines erfindungsgemäßen Garagentorantriebs.

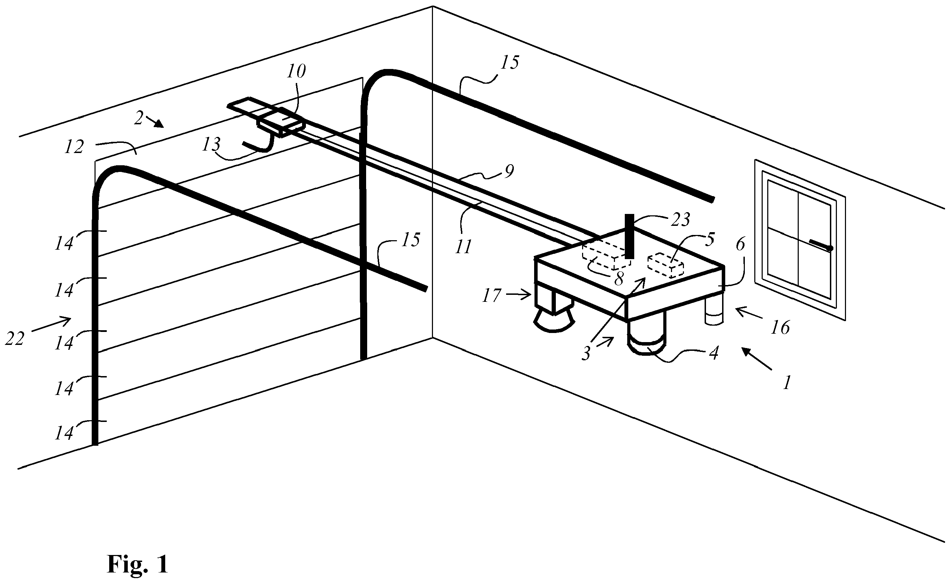

Figur 1 zeigt ein erstes Ausführungsbeispiel eines erfindungsgemäßen Garagentorantriebs 1 zum Öffnen und Schließen eines Garagentors 2. Der Garagentorantrieb 1 weist ein optisches Sensorsystem 3 auf, das einen optischen Sensor 4 und eine elektronische Auswerte- und Steuerungsvorrichtung 5 beinhaltet. Die elektronische Auswerte- und Steuerungsvorrichtung 5 empfängt elektrische Sensorsignale von dem optischen Sensor 4. Das optische Sensorsystem 3 ist dazu ausgebildet, einen Umgebungsbereich des Garagentorantriebs bei Vorliegen eines vorgegebenen oder vorgebbaren Ereignisses ein Warn- oder Hinweissignal auszugeben.

Der Garagentorantrieb 1 weist ein Gehäuse 6 auf, das unmittelbar oder mittels eines Halters 23 beispielsweise an einer Garagendecke befestigt werden kann. In dem Gehäuse 6 ist die elektronische Auswerte- und Steuerungsvorrichtung 5 angeordnet. Außerdem ist in dem Gehäuse 6 ein Antriebsmotor 8 zum Bewegen eines Torblattes oder von Torblattsektionen 12, 14 angeordnet. Der Garagentorantrieb 1 beinhaltet eine Laufschlittenführung 9, an der ein Laufschlitten 10 linear verschiebbar gehaltert ist. Der Laufschlitten 10 kann von dem Antriebsmotor 8 über ein Übertragungsmittel 11, beispielsweise eine umlaufende Kette oder ein umlaufender Seilzug oder über eine Spindel bewegt werden. An dem Laufschlitten 10 ist eine erste Torblattsektionen 12 mittels eines gelenkig angebundenen Befestigungshebels 13 befestigt. Die erste Torblattsektion 12 ist gelenkig mit weiteren Torblattsektionen 14 verbunden. Die Torblattsektionen 12, 14 sind an seitlichen Führungsschienen 15 geführt.

Der Garagentorantrieb 1 weist außerdem einen Projektor 16 und einen Lautsprecher 17 zum Ausgeben von optischen und akustischen Warn- und Hinweissignalen auf.

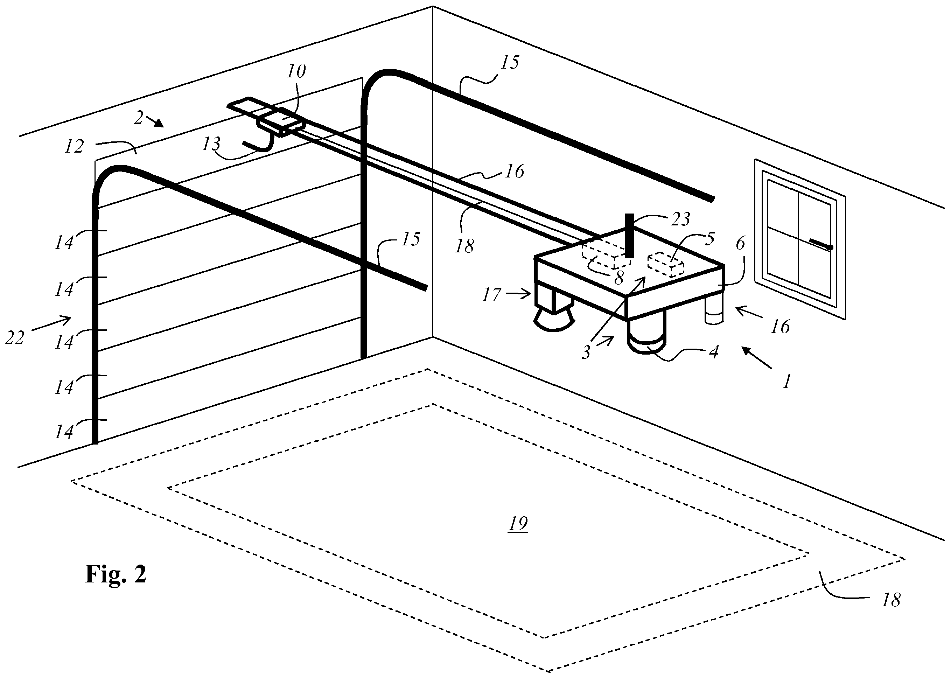

Figur 2 zeigt ein zweites Ausführungsbeispiel eines erfindungsgemäßen Garagentorantriebs 1, bei dem das optische Sensorsystem 3 dazu ausgebildet ist, einen festgelegten oder festlegbaren Abstellbereich 18 für ein Fahrzeug 7 zu überwachen. Der Abstellbereich beinhaltet eine Parksollposition 19, auf der ein Fahrzeug 7 idealer Weise abgestellt werden soll.

Figur 2 zeigt das zweite Ausführungsbeispiel bei einem Einparkvorgang. Das optische Sensorsystem 3 ist speziell dazu ausgebildet, eine aktuelle Position eines Fahrzeugs 7 bei dem Einparkvorgang fortlaufend zu erfassen, wobei die Auswerte- und Steuerungsvorrichtung 5 die jeweils erfasste Position des Fahrzeugs 7 mit der Parksollposition 19 vergleicht.

Solange die Parksollposition 19 nicht erreicht ist, gibt der Garagentorantrieb 1 dem Fahrer Hinweise, wie die Parksollposition 19 am einfachsten zu erreichen ist. Der Garagentorantrieb 1 gibt die Hinweise mittels des Projektors 9, der Steuerungsvorgaben für den Fahrer, insbesondere Lenkvorgaben und/oder Fahrtrichtungsvorgaben und/oder eine Anhaltevorgabe, auf eine Wand oder den Boden oder die Decke der Garage projiziert. Hierbei kann zusätzlich vorteilhaft vorgesehen sein, dass sich die Lichtfarbe der Projektionen 20 situationsangepasst ändert. Beispielsweise kann sich die Lichtfarbe von gelb auf rot ändern, wenn eine Kollision mit einer Wand oder einem Gegenstand droht. Alternativ oder zusätzlich kann sich die Lichtfarbe beispielsweise von gelb auf grün ändern, wenn die Parksollposition erreicht ist.

Der Garagentorantrieb 1 weist außerdem einen Lautsprecher 17 auf, der akustische Warn- oder Hinweissignale in Bezug auf das Erreichen der angestrebten Parksollposition 19 ausgibt. Insbesondere kann vorteilhaft vorgesehen sein, dass der Garagentorantrieb 1 über den Lautsprecher 17 Sprachanweisungen, wie: "rechts", "links", "vorwärts", "rückwärts" oder "halt" ausgibt. Alternativ oder zusätzlich ist es auch möglich, dass Tonsignale ausgegeben werden, deren Amplitude und/oder deren zeitlicher Abstand und/oder deren Frequenz sich beim Annähern an die Parksollposition 19 verändern. Im Falle der Gefahr, mit einem Gegenstand oder den Wänden zu kollidieren, kann beispielsweise ein Dauerpfeifton ausgegeben werden.

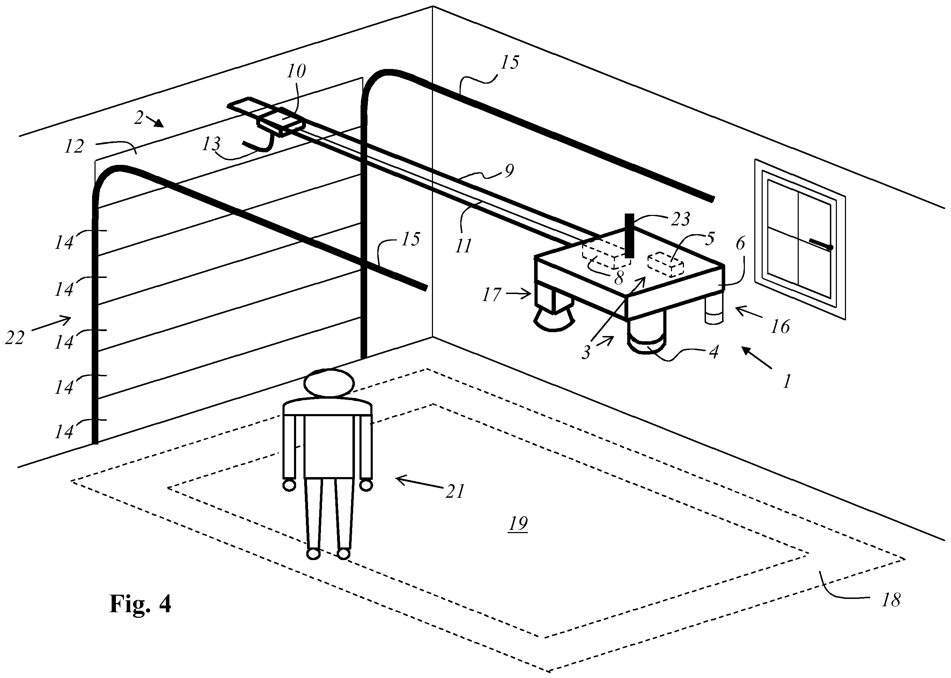

Figur 4 zeigt ein drittes Ausführungsbeispiel eines erfindungsgemäßen Garagentorantriebs 1, der ein Warnsignal ausgibt, wenn das optische Sensorsystem Personen 21 oder Gegenstände im Abstellbereich 18 oder im Gefahrenbereich 22 des sich bewegenden Torblattes beziehungsweise der sich bewegenden Torblattsektionen 12, 14 erkennt. Hierbei kann beispielsweise vorgesehen sein, dass in der Auswerte- und Steuerungsvorrichtung 5 zunächst eine oder mehrere Abbildungen des Abstellbereichs 18 und/oder des Gefahrenbereichs 22 ohne jegliche Gegenstände und Personen 21 aufgenommen werden und dass die Auswerte- und Steuerungsvorrichtung 5 in der Folge fortlaufend diese Abbildungen mit den jeweils aktuell mittels des optischen Sensors 4 erfassten Bildern der entsprechenden Bereiche vergleicht. Der optische Sensor 4 kann hierzu insbesondere als Kamera ausgebildet sein. Alternativ oder zusätzlich kann der optische Sensor 4 auch einen Bewegungsmelder aufweisen, der insbesondere Personen 21 oder Tiere in den genannten Bereichen erfassen kann.

Der Garagentorantrieb 1 ist außerdem dazu ausgebildet, die jeweils aktuelle Stellung des Garagentors 2, insbesondere des Torblattes beziehungsweise der Torblattsektionen 12, 14 zu erfassen und mit einer Garagentorsollposition zu vergleichen.

Der Garagentorantrieb 1 erhält vom Benutzer, beispielsweise per Funk, Steuerungsvorgaben, um das Garagentor 2 zu öffnen oder zu schließen. Der Garagentorantrieb 1 führt durch entsprechende Ansteuerung des Antriebsmotors 8 die Steuervorgaben aus, wobei der Garagentorantrieb 1 mittels des optischen Sensorsystems 3 fortlaufend überprüfen kann, ob das Garagentor 2 die ausgelöste Öffnungs- oder Schließbewegung tatsächlich ausführt oder ob das Garagentor 2 die Öffnungsposition oder die Schließposition vollständig erreicht hat. Außerdem kann auf diese Weise festgestellt werden, ob beispielsweise ein Einbruch vorliegt. Sollte das Garagentor 2 gemäß den Steuerungsvorgaben nämlich eigentlich geschlossen sein, während das optische Sensorsystem 3 feststellt, dass das Garagentor 2 offen steht, so kann daraus geschlossen werden, dass das Garagentor 2 unter Umgehung des Garagentorantriebes 1 manuell, möglicherweise gewaltsam, geöffnet wurde.

Ganz allgemein kann vorteilhaft vorgesehen sein, dass die Auswerte- und Steuerungsvorrichtung 5 eine mittels des optischen Sensorsystems 3 erfasste Stellung des Garagentors 2, insbesondere fortlaufend, mit einer Garagentorsollposition vergleicht. Hierzu kann beispielsweise vorteilhaft vorgesehen sein, dass in der Auswerte- und Steuerungsvorrichtung 5 Abbildungen des Garagentors 2 in unterschiedlichen Positionen abgespeichert sind. Insbesondere können beispielsweise eine Abbildung des vollständig geöffneten Garagentors 2 sowie eine Abbildung des vollständig geschlossenen Garagentors 2 gespeichert sein. Darüber hinaus können Abbildungen gespeichert sein, die in unterschiedlichen Stadien des Öffnungs- beziehungsweise Schließvorganges aufgenommen wurden. Anhand der Abbildungen kann der Garagentorantrieb 1 durch Vergleich mit der jeweils aktuell aufgenommenen Abbildung ermitteln, ob das Garagentor 2 den Steuerungsvorgaben folgt oder nicht.

Insbesondere kann vorteilhaft vorgesehen sein, dass der Garagentorantrieb 1 ein Warnsignal ausgibt, wenn die jeweils erfasste Stellung des Garagentors 13 nicht mit der Garagentorsollposition übereinstimmt.

Das optische Sensorsystem 3 ist außerdem dazu ausgebildet, eine Fahrzeuggröße zu erfassen und mit einer vorgegebenen oder vorgebbaren Fahrzeugmaximalgröße zu vergleichen. Auf diese Weise ist es ermöglicht, einem Fahrer, der gerade beabsichtigt, ein Fahrzeug 7 in eine geöffnete und mit dem erfindungsgemäßen Garagentorantrieb 1 ausgerüstete Garage einzufahren, durch Ausgabe eines optischen und/oder akustischen Warnsignals anzuzeigen, dass das Fahrzeug 7 die maximal zulässige Größe überschreitet und die Gefahr besteht, beim Einparken mit den Garagenwänden oder Gegenständen zu kollidieren oder dass die Gefahr besteht, nach dem erfolgten Einparken die Fahrzeugtüren nicht mehr öffnen zu können, weil zu wenig Raum in der Garage zur Verfügung steht.

Das optische Sensorsystem 3 ist außerdem dazu ausgebildet, einen Gefahrenbereich des Garagentores 2 zu überwachen. Der Garagentorantrieb 1 hält eine Öffnungs- oder Schließbewegung sofort an und/oder gibt ein Warnsignal aus, wenn der optische Sensor 3 Gegenstände oder Personen 21 im Gefahrenbereich des Garagentors 2 erfasst.

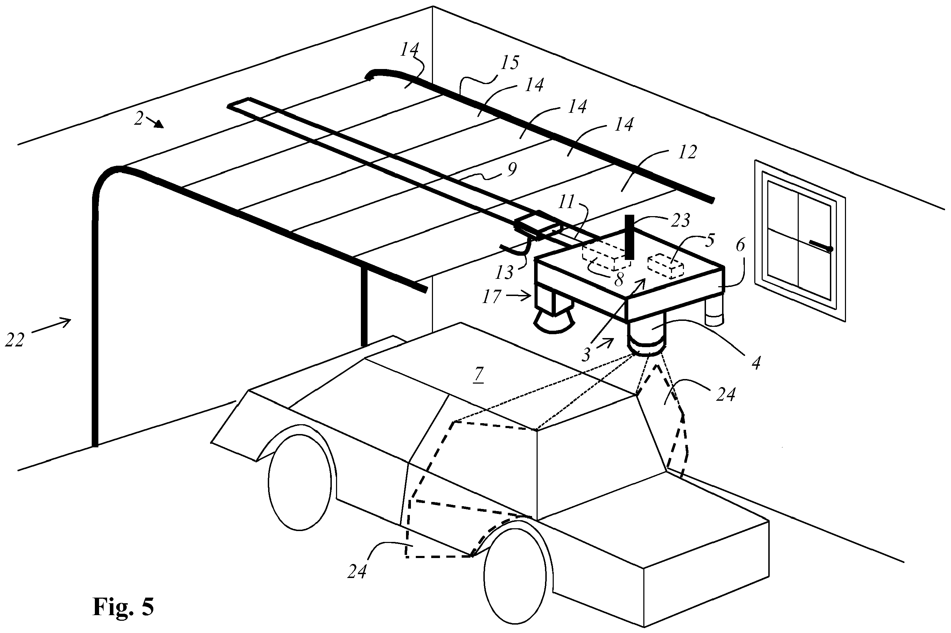

Fig. 5 zeigt eine Garage mit einem Gargentor und mit einem vierten Ausführungsbeispiel eines erfindungsgemäßen Garagentorantriebs 1. Der Garagentorantrieb 1 ist dazu ausgebildet mittels eines optischen Sensors 4 zu erkennen, ob eine Kollision einer Fahrzeugtür 24 mit einer Wand oder einem Gegenstand droht. Sollte der Garagentorantrieb 1 auf Grund der erfassten Position des Fahrzeugs und der Fahrzeugumgebung feststellen, dass eine Kollision möglich ist, warnt der Garagentorantrieb vor der Gefahr durch Ausgabe eines Warnsignals. Auf diese Weise ist vorteilhaft beispielsweise erreicht, dass die Personen, die aus einem gerade geparkten Fahrzeug aussteigen wollen, gewarnt und angeleitet sind, die betroffene Fahrzeugtür 24 vorsichtig oder gar nicht zu öffnen.

### Bezugszeichenliste:

- 1: Garagentorantrieb
- 2: Garagentor
- 3: optisches Sensorsystem
- 4: optischer Sensor
- 5: Auswerte- und Steuerungsvorrichtung
- 6: Gehäuse
- 7: Halter
- 8: Antriebsmotor
- 9: Laufschlittenführung
- 10: Laufschlitten
- 11: Übertragungsmittel
- 12: erste Torblattsektion
- 13: Befestigungshebel
- 14: Weitere Torblattsektionen
- 15: Führungsschienen
- 16: Projektor
- 17: Lautsprecher
- 18: Abstellbereich
- 19: Parksollposition
- 20: Projektionen
- 21: Person
- 22: Gefahrenbereich
- 23: Halter
- 24: Fahrzeugtür

## Patentansprüche

1. Garagentorantrieb (1) zum Öffnen und Schließen eines Garagentores (2), wobei der Garagentorantrieb (1) ein optisches Sensorsystem (3), das einen optischen Sensor (4) und eine elektronische Auswerte- und Steuerungsvorrichtung (5) aufweist, die elektrische Sensorsignale von dem optischen Sensor (4) empfängt, und das dazu ausgebildet ist, wenigstens einen Umgebungsbereich des Garagentorantriebs (1) zu überwachen, **dadurch gekennzeichnet, dass** das optische Sensorsystem (3) dazu ausgebildet ist, ein Warn- oder Hinweissignal unmittelbar in eine Garage, in der der Gargentorantrieb montiert ist, auszugeben und/oder eine sicherheitsrelevante Aktivität des Garagentores auszulösen.

2. Garagentorantrieb (1) nach Anspruch 1, **dadurch gekennzeichnet, dass** das optische Sensorsystem (3) das akustische oder optische Warn- oder Hinweissignal nicht mittels eines in einem Fahrzeug anordenbaren oder angeordneten Sendeempfängers, insbesondere trainierbaren Sendempfängers, ausgibt.

3. Garagentorantrieb (1) nach Anspruch 1 oder 2, **dadurch gekennzeichnet, dass**
a. das optische Sensorsystem (3) dazu ausgebildet ist, einen Abstellbereich (18) für ein Fahrzeug zu überwachen, und/oder dass
b. der optische Sensor (4) dazu ausgebildet ist, eine Position eines Fahrzeuges (7) zu erfassen oder dass der optische Sensor (4) dazu ausgebildet ist fortlaufend Positionen eines Fahrzeuges (7) bei einem Einparkvorgang zu erfassen, und/oder dass
c. die Auswerte- und Steuerungsvorrichtung (5) eine erfasste Position eines Fahrzeugs (7) mit einer Parksollposition (19) vergleicht oder dass die Auswerte- und Steuerungsvorrichtung (5) erfasste Positionen eines Fahrzeugs (7) fortlaufend mit einer Parksollposition (19) vergleicht.

4. Garagentorantrieb (1) nach einem der Ansprüche 1 bis 3, **dadurch gekennzeichnet, dass** der Garagentorantrieb (1) als Warn- oder Hinweissignal optische und/oder akustische Steuerungsvorgaben zum Unterstützen eines Fahrers bei der Positionierung seines Fahrzeugs (7) zum Erreichen der Parksollposition (19) ausgibt.

5. Garagentorantrieb (1) nach Anspruch 4, **dadurch gekennzeichnet, dass**
a. die Steuerungsvorgaben Lenkvorgaben und/oder Fahrtrichtungsvorgaben und/oder eine Anhaltevorgaben beinhalten, und/oder dass
b. der Garagentorantrieb (1) ein Hinweissignal ausgibt, wenn die aktuelle Position eines Fahrzeugs (7) mit der Parksollposition (19) übereinstimmt, und/oder dass
c. .der Garagentorantrieb (1) ein Warn- oder Hinweissignal ausgibt, wenn das optische Sensorsystem (3) Personen (21) oder Gegenstände in dem Abstellbereich (18) erfasst.

6. Garagentorantrieb (1) nach einem der Ansprüche 1 bis 5, **dadurch gekennzeichnet, dass** das optische Sensorsystem (3) dazu ausgebildet ist, eine Stellung eines Garagentors (2) zu erfassen.

7. Garagentorantrieb (1) nach Anspruch 6, **dadurch gekennzeichnet, dass** die Auswerte- und Steuerungsvorrichtung (5) eine erfasste Stellung des Garagentors (2) mit einer Garagentorsollposition vergleicht und ein Warn- oder Hinweissignal ausgibt und/oder eine sicherheitsrelevante Aktivität des Garagentores auslöst, wenn die erfasste Stellung des Garagentors (2) nicht mit der Garagentorsollposition übereinstimmt.

8. Garagentorantrieb (1) nach einem der Ansprüche 1 bis 7, **dadurch gekennzeichnet, dass**
a. das optische Sensorsystem (3) dazu ausgebildet ist, eine Fahrzeuggröße zu erfassen und mit einer Fahrzeugmaximalgröße zu vergleichen, oder dass
b. das optische Sensorsystem (3) dazu ausgebildet ist, eine Fahrzeuggröße zu erfassen und mit einer Fahrzeugmaximalgröße zu vergleichen, wobei der Garagentorantrieb (1) ein Warn- oder Hinweissignal ausgibt und/oder eine sicherheitsrelevante Aktivität des Garagentores auslöst, wenn die erfasste Fahrzeuggröße eine Fahrzeugmaximalgröße übersteigt.

9. Garagentorantrieb (1) nach einem der Ansprüche 1 bis 8, **dadurch gekennzeichnet, dass**
a. das optische Sensorsystem (3) dazu ausgebildet ist, einen Gefahrenbereich eines Garagentores (2) zu überwachen, oder dass
b. das optische Sensorsystem (3) dazu ausgebildet ist, einen Gefahrenbereich eines Garagentores (2) zu überwachen, wobei der Garagentorantrieb (1) eine Öffnungs- oder Schließbewegung anhält und/oder ein Warnsignal ausgibt, wenn der optische Sensor (4) Gegenstände oder Personen (21) im Gefahrenbereich des Garagentors (2) erfasst.

10. Garagentorantrieb (1) nach einem der Ansprüche 1 bis 9, **dadurch gekennzeichnet, dass** der optische Sensor (4) einen Bewegungsmelder und/oder eine Kamera beinhaltet oder dass der optische Sensor (4) als Bewegungsmelder und/oder als Kamera ausgebildet ist.

11. Garagentorantrieb (1) nach einem der Ansprüche 1 bis 10, **dadurch gekennzeichnet, dass** das Warn- oder Hinweissignal ein
a. optisches Signal ist oder
b. das Ändern einer Lichtfarbe eines von dem Garagentorantrieb (1) abgestrahlten Lichtes umfasst oder
c. ein Blinken eines von dem Garagentorantrieb (1) abgestrahlten Lichtes umfasst oder
d. ein Lauflicht umfasst oder
e. eine optische Projektion (20) eines Symbols oder einer Schrift umfasst oder
f. ein Bewegen einer optischen Projektion (20) beinhaltet oder
g. ein akustisches Signal ist oder
h. ein akustisches Signal ist, das Tonsignale umfasst, deren Amplitude und/oder deren zeitlicher Abstand und/oder deren Frequenz sich ereignisabhängig verändern, oder
i. ein Funksignal an ein, insbesondere mobiles, Empfangsgerät ist.

12. Garagentorantrieb (1) nach einem der Ansprüche 1 bis 11, **dadurch gekennzeichnet, dass** der Garagentorantrieb (1) ein Gehäuse (6) zur Überkopfmontage und/oder zur Montage an einer Garagendecke aufweist und dass
a. der optische Sensor (4) an oder wenigstens teilweise in dem Gehäuse (6) angeordnet ist, und/oder dass
b. die elektronische Auswerte- und Steuerungsvorrichtung (5) in dem Gehäuse (6) angeordnet ist, und/oder dass
c. ein Antriebsmotor (8) zum Bewegen eines Torblattes oder von Torblattsektionen (12, 14) in dem Gehäuse (6) angeordnet ist.

13. Garagentorantrieb (1) nach einem der Ansprüche 1 bis 12, **dadurch gekennzeichnet, dass** der Garagentorantrieb (1) dazu ausgebildet ist, ein Garagentor (2), insbesondere ein Schwingtor oder ein Sektionaltor, über ein Übertragungsmittel (11), insbesondere ein Zugmittel oder eine Kette oder einen Zahnriemen oder eine Spindel, zwischen einer Geschlossenstellung und einer Öffnungsstellung zu bewegen.

14. Garagentorsystem mit einem Garagentor, insbesondere einem Schwingtor oder einem Sektionaltor, und mit einem Garagentorantrieb (1) nach einem der Ansprüche 1 bis 13, mittels dem das Garagentor (2) von einer Geschlossenstellung und in eine Öffnungsstellung oder von einer Öffnungsstellung und in eine Geschlossenstellung bewegbar ist.

15. Garagentorsystem nach Anspruch 14, **dadurch gekennzeichnet, dass** das Garagentor (2) wenigstens eine Laufschlittenführung (9) zum Führen eines Laufschlittens (10) oder Führungsschienen (15) zum Führen eines Torblattes oder zum Führen von Torblattsektionen (12, 14) aufweist.
